# EUROPÄISCHE PATENTANMELDUNG

(11) **EP 3 248 912 A1**
(43) Veröffentlichungstag der Anmeldung: **29.11.2017**
(21) Anmeldenummer: 17172262.2
(22) Anmeldetag: 22.05.2017
(51) Int. Cl.: B65G 47/248

(54) **VORRICHTUNG UND VERFAHREN ZUM WENDEN VON PROFILEN**

(30) Priorität: 24.05.2016 DE 102016109484
(71) Anmelder: RSA cutting systems GmbH, 58239 Schwerte (DE)
(72) Erfinder: Schmale, Gunnar, 58300 Wetter (DE); Berg, Thomas, 44149 Dortmund (DE); Labendsch, Bernd, 42651 Solingen (DE)
(74) Vertreter: Ostriga Sonnet Wirths & Vorwerk

(57) **Zusammenfassung**

Die Erfindung betrifft eine Vorrichtung und ein Verfahren zum Wenden von Profilen mit mindestens zwei möglichen Positionierungen, wie Rechteck- oder Winkelprofile, als Teil einer Querfördereinrichtung vor- und/oder nachgeordnet einer Bearbeitungsmaschine.

Die Aufgabe der Erfindung besteht deshalb darin, eine Vorrichtung zum Wenden von Profilen mit mindestens zwei möglichen Positionierungen, wie Rechteck- oder Winkelprofile, als Teil einer Querfördereinrichtung zu schaffen, mit der eine automatische Korrektur der Lage einzelner Profile möglich ist.

Die Aufgabe wird gelöst, indem dass unterhalb der Bewegungsbahn der auf der Querfördereinrichtung angeordneten Profile mindestens eine vorwiegend vertikal bewegliche, aus zwei im Winkel von ungefähr 90° angeordneten Schenkel bestehende Wendestation angeordnet ist, durch die mittels einer Drehung von ungefähr 90° jeweils ein Profil in eine gewünschte Position bewegbar ist.

## Beschreibung

Die Erfindung betrifft zunächst eine Vorrichtung zum Wenden von Profilen mit mindestens zwei möglichen Positionierungen, wie Rechteck- oder Winkelprofile, als Teil einer Querfördereinrichtung vor- und/oder nachgeordnet einer Bearbeitungsmaschine.

Insbesondere bei der Zuführung von Profilen zu einer Bearbeitungsmaschine, z.B. einer Sägeeinrichtung, ist es sehr wichtig, dass die meist mehrere Profile aufweisenden Lagen eine gleiche Orientierung aufweisen. Bei diesen Profilen handelt es sich somit um alle Profile, die bei Lagerung auf einer Unterlage mindestens zwei unterschiedliche Positionierungen aufweisen können.

Da die Zuführeinrichtungen für Bearbeitungsmaschinen jedoch nicht hundertprozentig garantieren können, dass immer die gewünschte einheitliche Orientierung der Profile bei der Zuführung gewährleistet ist, müssen solche Bearbeitungsstationen meist manuell überwacht werden. Dies bedeutet, dass die die Anlage überwachende Person bei Erkennen einer falschen Orientierung eines Profils die Gesamtanlage manuell stillsetzen muss, das Profil in die richtige Orientierung bewegen muss und dann erst der Betrieb fortgesetzt werden kann.

Die Aufgabe der Erfindung besteht deshalb darin, eine Vorrichtung zum Wenden von Profilen mit mindestens zwei möglichen Positionierungen, wie Rechteck- oder Winkelprofile, als Teil einer Querfördereinrichtung zu schaffen, mit der eine automatische Korrektur der Lage einzelner Profile möglich ist.

Die Lösung der Aufgabe ergibt sich aus den Merkmalen des nachfolgenden Anspruchs 1:
Vorrichtung zum Wenden von Profilen mit mindestens zwei möglichen Positionierungen, wie Rechteck- oder Winkelprofile, als Teil einer Querfördereinrichtung vor- und/oder nachgeordnet einer Bearbeitungsmaschine, dadurch gekennzeichnet, dass unterhalb der Bewegungsbahn der auf der Querfördereinrichtung angeordneten Profile mindestens eine vorwiegend vertikal bewegliche, aus zwei im Winkel von ungefähr 90° angeordneten Schenkel bestehende Wendestation angeordnet ist, durch die mittels einer Drehung von ungefähr 90° jeweils ein Profil in eine gewünschte Position bewegbar ist.

Der wesentliche Vorteil der Erfindung besteht darin, dass durch die erfindungsgemäße Vorrichtung auf einfache Weise eine Drehung des nicht die gewünschte Orientierung aufweisenden Profils möglich ist.

Bei Verbindung dieser Erfindung mit einer vorgeschalteten Einrichtung zur automatischen Höhenerkennung ist sogar ein vollautomatischer und damit mannloser Betrieb der Anlage möglich, da die erfindungsgemäße Vorrichtung jede nur erdenkliche Situation bei der Zuführung durch die automatische Höhenerkennung erkennt und dann automatisch die Vorrichtung zum Wenden von Profilen die gewünschte Orientierung der Profile wiederherstellt.

Bei einer vorteilhaften Ausführungsform der Erfindung ist die Wendestation durch einen ersten Pneumatik-Zylinder vertikal bewegbar und es wird durch einen zweiten am vertikalen Schenkel der Wendestation angeordneten Pneumatik-Zylinder die Drehbewegung der Wendestation hervorgerufen.

Bei einer weiteren vorteilhaften Ausführungsform der Erfindung ist die Wendestation mit Näherungssensoren versehen, die das Vorhandensein eines Profils in der Wendestation erkennen. Hierdurch wird die Sicherheit der erfindungsgemäßen Vorrichtung weiter vergrößert.

Des Weiteren betrifft die Erfindung ein Verfahren zum automatischen Wenden von Profilen mit mindestens zwei möglichen Positionierungen, wie Rechteck- oder Winkelprofile, auf einer Querfördereinrichtung einer Bearbeitungsmaschine.

Ausgehend von dem oben dargelegten Stand der Technik sowie der ebenfalls dargelegten Aufgabe ergibt sich die Lösung aus den Merkmalen des nachfolgenden Anspruchs 5:
Verfahren zum automatischen Wenden von Profilen mit mindestens zwei möglichen Positionierungen, wie Rechteck- oder Winkelprofile, auf einer Querfördereinrichtung einer Bearbeitungsmaschine, gekennzeichnet durch folgende Verfahrensschritte:
   a. Festlegung einer gewünschten Orientierung eines Profils auf der Querförderanlage
   b. Bewegung der Wendestation unter die Bewegungsbahn der auf der Querfördereinrichtung angeordneten Profile
   c. Erfassung eines entgegen der gewünschten Orientierung angeordneten Profils
   d. Bewegung der Wendestation in die Bewegungsbahn der Profile
   e. falsch orientiertes Profil bewegt sich in den Drehbereich der Wendestation
   f. Drehung des Profils in der Wendestation um 90°
   g. Bewegung der Wendestation unter die Bewegungsbahn der Profile
   h. Zurückschwenken der Wendestation in die Ausgangsstellung

Das erfindungsgemäße Verfahren hat den wesentlichen Vorteil, dass mit ihm automatisch und damit ohne manuelle Kontrolle die immer gleiche Orientierung von Profilen garantiert werden kann, die einer Bearbeitungsmaschine zugeführt werden.

Weitere Vorteile der Erfindung ergeben sich aus der nachfolgenden Beschreibung eines Ausführungsbeispiels. Es zeigen:
- Fig. 1: eine Draufsicht auf eine Vorrichtung zum Wenden von Rechteckprofilen als Teil einer Querfördereinrichtung für eine Lagensäge,
- Fig. 2: eine schematische Teil-Schnittdarstellung durch eine Vorrichtung gemäß Fig. 1,
- Fig. 2b bis 2c: Darstellungen des Wendevorgangs eines Rechteckprofils,
- Fig. 3a bis 3g: Darstellungen des Wendevorgangs bei zwei auf den Querförderern aneinander liegenden, unterschiedlich orientierten Rechteckprofilen,
- Fig. 4: Darstellung des Betriebszustandes bei zwei übereinander auf den Querförderern angeordneten Rechteckprofilen,
- Fig. 5a bis 5d: Darstellungen des Betriebsablaufs bei zwei hochkant aneinander stoßend auf dem Querförderer angeordneten Rechteckprofilen.

In den Zeichnungen ist eine Vorrichtung zum Wenden von Rechteckrohren insgesamt mit der Bezugsziffer 10 bezeichnet.

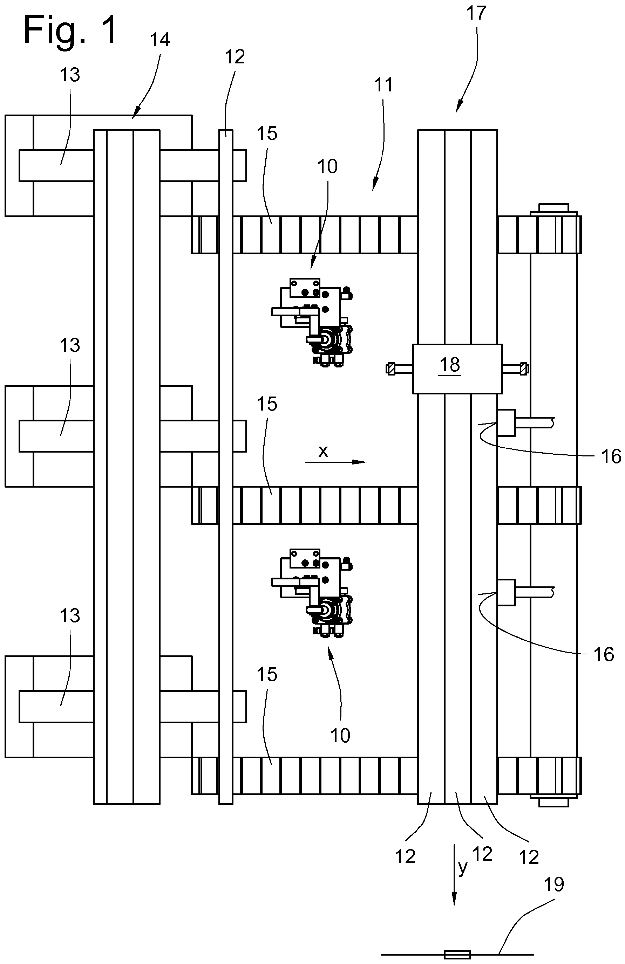

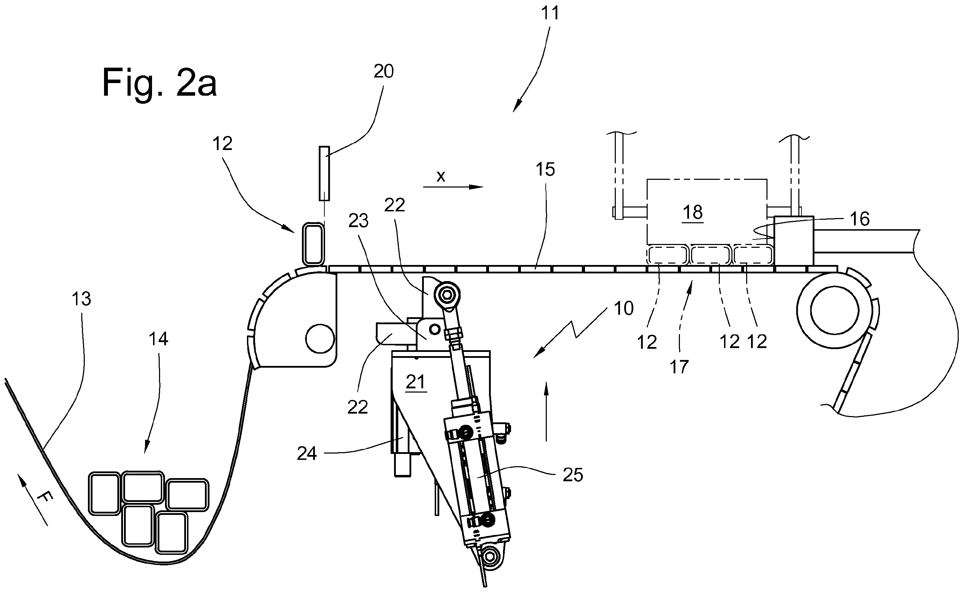

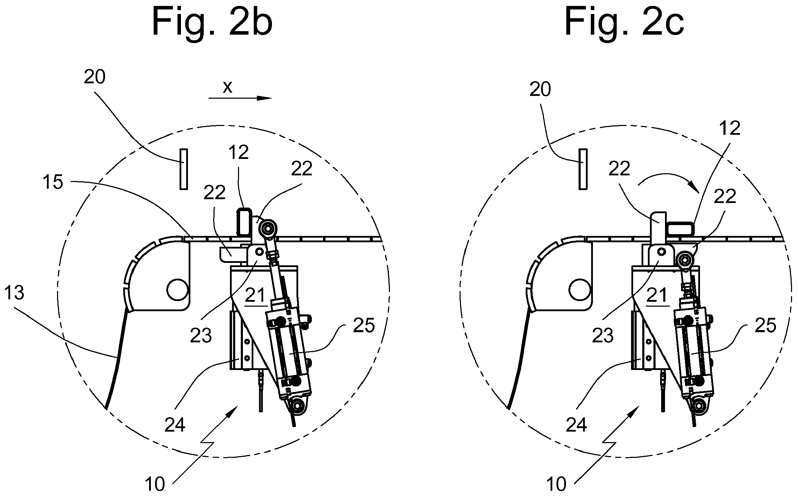

In der Fig. 1 ist eine Querfördereinrichtung 11 für Rechteckprofile 12 dargestellt, wobei der Querfördereinrichtung 11 eine Gurtmulde 13 für einen Rohrbund 14 von Rechteckrohren 12 vorgeschaltet ist. Zwischen Kettenförderern 15 des Querförderers 11 sind zwei Vorrichtungen 10 zum Wenden von Rechteckrohren 12 angeordnet. Die in der gewünschten, liegenden Orientierung angeordneten Rechteckprofile 12 bewegen sich in Bewegungsrichtung x bis zu einem Anschlag 16. Dort bilden die Rechteckprofile 12 eine Rohrlage 17. Oberhalb der Rohrlage 17 ist - wie in den Fig. 1 und 2 dargestellt - eine Antriebsrolle 18 angeordnet, die auf die Rohrlage 17 abgesenkt werden kann und mit der die Rohrlage 17 in y-Richtung zu einer nur angedeuteten Lagensäge 19 transportiert werden kann.

In der Fig. 2a ist der Gesamtaufbau von Querförderer 11 und Wendestation 10 im Einzelnen dargestellt.

Dem Querförderer 11 vorgelagert ist die Gurtmulde 13 mit einem Rohrbund 14 zu erkennen. Durch Einwirkung einer Kraft F auf die Gurtmulde 13 kann der Rohrbund 14 auf das Niveau des Querförderers 11 angehoben und ein Rechteckprofil 12 auf die Kettenförderer 15 transportiert werden. Im vorliegenden Fall hat dieses Rechteckprofil 12 nicht die gewünschte, liegende Anordnung auf den Kettenförderern 15, sondern eine hochkante Anordnung, welche jedoch durch eine optische Höhenkontrolle 20 erfasst wird.

Das Signal der optischen Höhenkontrolle 20 setzt die Vorrichtungen zum Wenden 10 in Betrieb. Die unterhalb der Bewegungsbahn der Querfördereinrichtung 11 angeordneten Vorrichtungen 10 weisen jeweils eine Hubkonsole 21 auf, auf der eine drehbar angeordnete, aus zwei im Winkel von ungefähr 90° angeordneten Schenkeln 22 bestehende Wendestation 23 angeordnet ist. Die Hubkonsole 21 kann über einen ersten Pneumatik-Zylinder 24 vertikal so weit bewegt werden, dass der vertikale Schenkel 22 der Wendestation 23 in die Bewegungsbahn der auf dem Querförderer 11 angeordneten Rechteckprofile 12 ragt. Zusätzlich ist an der Hubkonsole 21 ein zweiter Pneumatik-Zylinder 25 angeordnet, der zugleich mit dem vertikalen Schenkel 22 der Wendestation 23 verbunden ist.

Nachdem die optische Höhenkontrolle 20 die nicht gewünschte Orientierung des Rechteckprofils 12 in der Fig. 2 erkannt hat, bewegt sich die Hubkonsole 21 unter Einwirkung des ersten Pneumatik-Zylinders 24 in die Bewegungsbahn der Rechteckprofile 12 auf dem Querförderer 11. Aufgrund der Bewegung des Querförderers 11 in Bewegungsrichtung x entsteht somit gemäß Fig. 2b die Situation, dass das hochkant orientierte Rechteckprofil 12 an den vertikalen Schenkel 22 der Wendestation 23 anschlägt. Auf nicht dargestellte Weise sind die Schenkel 22 der Wendestation 23 mit Näherungssensoren versehen, die das Vorhandensein eines Profils in der Wendestation 23 erkennen.

Zu diesem Zeitpunkt erhält der zweite Pneumatikzylinder 25 von den Näherungssensoren ein Signal und bewegt die Wendestation 23 um 90° im Uhrzeigersinn. Diese Situation ist in der Fig. 2c dargestellt. Mit der Drehung der Wendestation 23 um 90° kippt das zuvor hochkant angeordnete Rechteckprofil 12 in die gewünschte liegende Anordnung.

Aus der Fig. 2a erkennt man ergänzend in gestrichelter Form, dass nach beispielsweise der Bildung einer sich am Anschlag 16 aufstauenden Rohrlage 17 von drei liegenden Rechteckprofilen 12 das Antriebsrad 18 auf die Oberfläche der Rechteckprofile 12 abgesenkt werden kann und nach Inbetriebnahme des Antriebsrades 18 die Rohrlage 17 in Richtung der Lagensäge 19 transportiert werden kann.

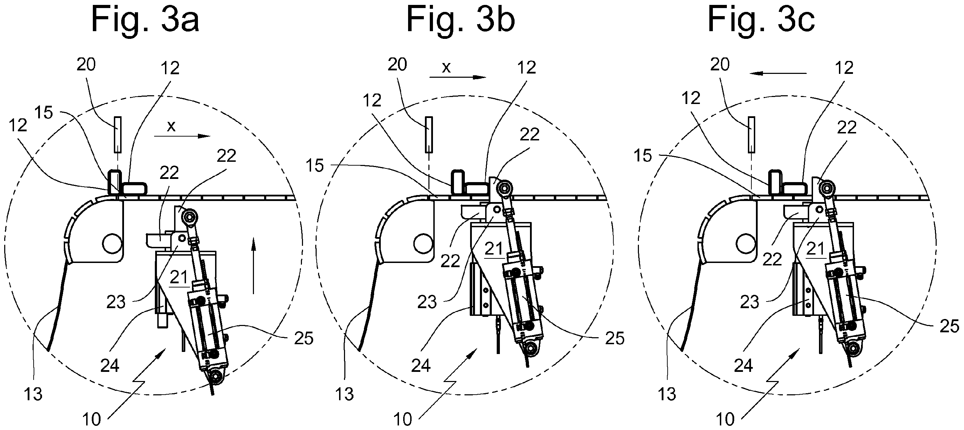

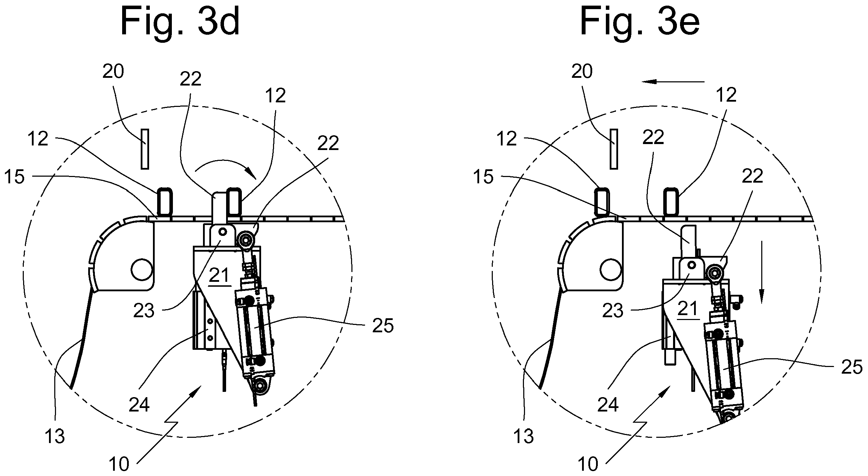

In den Fig. 3a bis 3f ist die Situation dargestellt, bei der durch Betätigung der Gurtmulde 13 nicht nur ein Rechteckprofil 12 in liegender Anordnung, sondern unmittelbar daran stoßend zusätzlich auch ein weiteres Rechteckprofil 12 in hochkanter Anordnung auf dem Querförderer 11 transportiert worden ist. In einem solchen Fall erkennt die optische Höhenkontrolle 20 einerseits aufgrund der Abstandsmessung zwischen der optischen Höhenkontrolle 20 und der Oberfläche des Profils 12 und andererseits aufgrund der bei konstanter Geschwindigkeit des Querförderers 11 sich ergebenden zeitlichen Länge eines Abstandssignals, das ein liegendes und ein hochkant angeordnetes, aneinander stoßendes Rechteckprofil 12 auf dem Querförderer 11 vorhanden ist.

Auch in einem solchen Fall wird die Vorrichtung 10 zum Wenden von Rechteckrohren 12 in Betrieb gesetzt.

In der Fig. 3b erkennt man zunächst, dass der Querförderer 11 sich in x-Richtung so lange weiterbewegt, bis dass die aneinanderstoßende Anordnung aus liegenden und hochkant angeordneten Rechteckprofilen 12 an den vertikalen Schenkel 22 der Wendestation 23 stößt. Durch das Signal des Näherungssensors wird dann die Bewegungsrichtung des Querförderers 11 (s. Fig. 3c) umgekehrt und der Querförderer 11 so weit zurückgefahren, dass nur noch das liegende Profil 12 im Einwirkungsbereich der Wendestation 23 liegt. Danach wird - wie in Fig. 3d dargestellt - das liegende Reckteckprofil 12 zunächst einmal wieder in die nicht gewünschte hochkante Position gedreht.

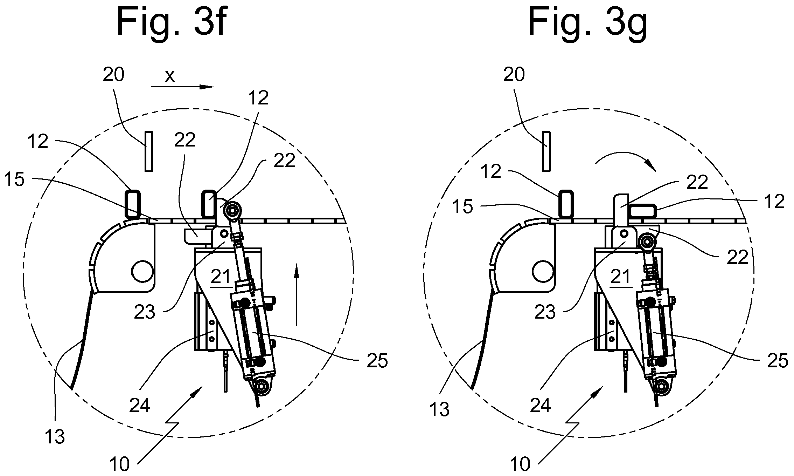

In einem nächsten Schritt werden die nun beabstandet in einer hochkanten Position auf dem Querförderer 11 angeordneten Rechteckprofile 12 so weit zurückgefahren, dass - wie in Fig. 3f dargestellt - die Vorrichtung 10 zum Wenden von Rechteckrohren 12 wieder in die Bewegungsbahn eingreifen kann und das vordere Rechteckprofil 12 sich im Einwirkungsbereich der Wendestation 23 befindet.

Letztlich ist dann in Fig. 3g dargestellt, dass das vordere Rechteckprofil 12 durch Betätigung der Wendestation 23 in die liegende Position gebracht wird. Danach kann auf nicht dargestellte Weise auch das zweite hochkant angeordnete Rechteckprofil 12 wiederum in den Bereich der Wendestation 23 bewegt werden und ebenfalls in eine liegende Orientierung gebracht werden.

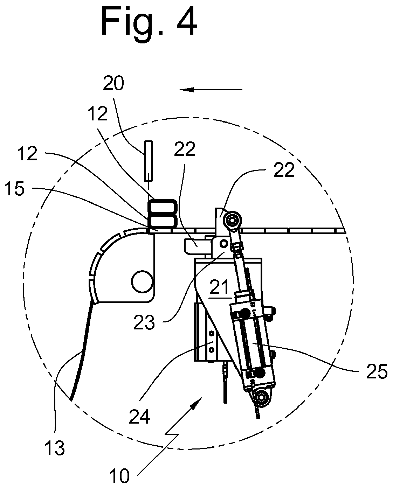

In der Fig. 4 ist eine weitere Möglichkeit einer nicht gewünschten Orientierung von Rechteckprofilen 12 auf dem Querförderer 11 dargestellt. Hierbei handelt es sich um die übereinander liegende Anordnung, die ebenfalls von der optischen Höhenkontrolle 20 aufgrund der zeitlichen Länge des Abstandssignals erkannt wird. In einem solchen Fall wird lediglich die Förderrichtung des Querförderers 11 umgekehrt und diese beiden Rechteckprofile 12 wieder in die Gurtmulde 13 zurücktransportiert.

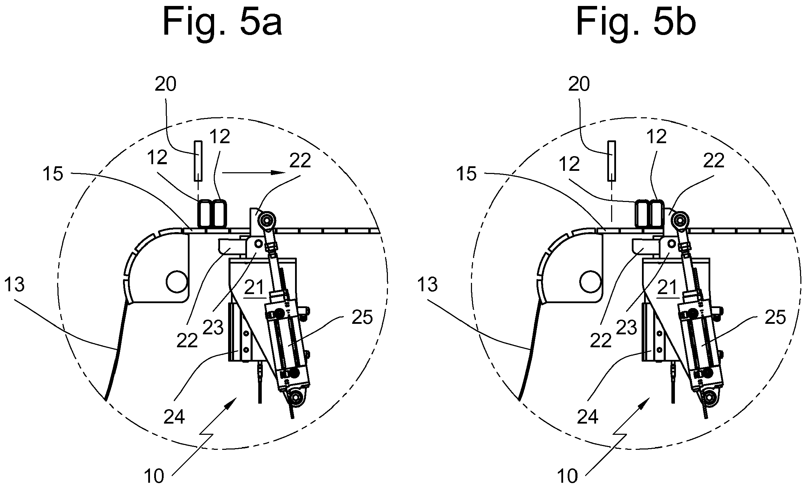

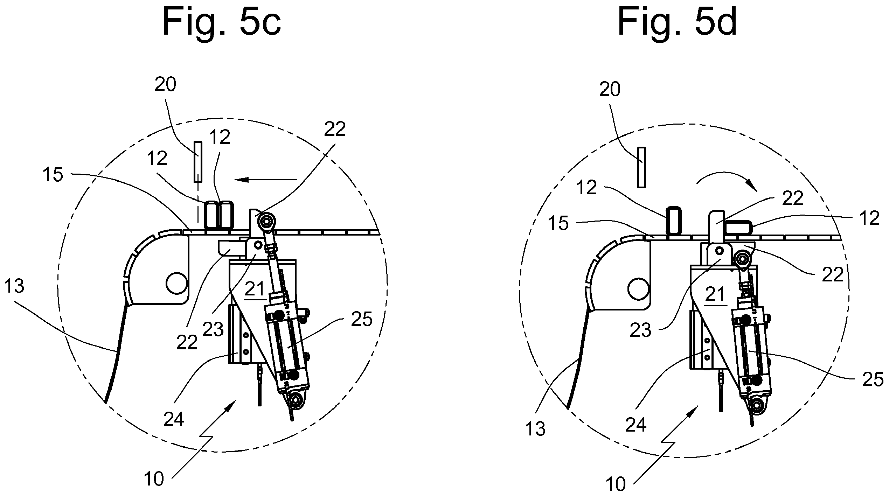

Letztlich ist in den Fig. 5a bis 5d die Situation dargestellt, dass mit Hilfe der Gurtmulde 13 zwei hochkant aneinanderstoßende Rechteckprofile 12 auf den Querförderer 11 gelangt sind (s. Fig. 5a). Nach der Erkennung dieser Situation durch die optische Höhenkontrolle 20 werden beide hochkant angeordneten Rechteckprofile 12 zunächst einmal mit Hilfe des Querförderers 11 in den Bereich der Wendestation 23 bewegt. Durch das Signal des Näherungssensors wird dann wiederum die Bewegungsrichtung des Querförderers 11 umgedreht, bis dass sich nur noch ein hochkant angeordnetes Rechteckprofil 12 im Bewegungsbereich der Wendestation 23 befindet (s. Fig. 5c). Durch Betätigung der Wendestation 23 wird dieses dann gedreht (s. Fig. 5d).

Auf nicht dargestellte Weise kann dann das zweite hochkant angeordnete Rechteckprofil 12 ebenfalls in den Bereich der Wendestation 23 bewegt werden und auch in eine liegende Position gedreht werden.

### Bezugszeichenliste

- 10: Vorrichtung zum Wenden von Rechteckrohren
- 11: Querfördereinrichtung
- 12: Rechteckprofil
- 13: Gurtmulde
- 14: Rohrbund
- 15: Kettenförderer
- 16: Anschlag
- 17: Rohrlage
- 18: Antriebsrad
- 19: Lagensäge
- 20: optische Höhenkontrolle
- 21: Hubkonsole
- 22: Schenkel
- 23: Wendestation
- 24: erster Pneumatikzylinder
- 25: zweiter Pneumatikzylinder

- x: Bewegungsrichtung
- y: Richtung
- F: Kraft

## Patentansprüche

1. Vorrichtung (10) zum Wenden von Profilen mit mindestens zwei möglichen Positionierungen, wie Rechteck- oder Winkelprofile, als Teil einer Querfördereinrichtung vor- und/oder nachgeordnet einer Bearbeitungsmaschine, **dadurch gekennzeichnet, dass** unterhalb der Bewegungsbahn der auf der Querfördereinrichtung (11) angeordneten Profile (12) mindestens eine vorwiegend vertikal bewegliche, aus zwei im Winkel von ungefähr 90° angeordneten Schenkel (22) bestehende Wendestation (23) angeordnet ist, durch die mittels einer Drehung von ungefähr 90° jeweils ein Profil (12) in eine gewünschte Position bewegbar ist.

2. Vorrichtung nach Anspruch 1, **dadurch gekennzeichnet, dass** der Vorrichtung (10) eine Einrichtung zur automatischen Höhenerkennung (20) vorgeschaltet ist.

3. Vorrichtung nach Anspruch 1, **dadurch gekennzeichnet, dass** die Wendestation (23) durch einen ersten Pneumatik-Zylinder (24) vertikal bewegbar ist und dass durch einen zweiten am vertikalen Schenkel (22) der Wendestation (23) angeordneten Pneumatikzylinder (25) die Drehbewegung der Wendestation (23) hervorgerufen wird.

4. Vorrichtung nach Anspruch 1 oder 2, **dadurch gekennzeichnet, dass** die Wendestation (23) mit Näherungssensoren versehen ist, die das Vorhandensein eines Profils (12) in der Wendestation (23) erkennen.

5. Verfahren zum automatischen Wenden von Profilen mit mindestens zwei möglichen Positionierungen, wie Rechteck- oder Winkelprofile, auf einer Querfördereinrichtung einer Bearbeitungsmaschine, **gekennzeichnet durch** folgende Verfahrensschritte:
a. Festlegung einer gewünschten Orientierung eines Profils auf der Querförderanlage
b. Bewegung der Wendestation unter die Bewegungsbahn der auf der Querfördereinrichtung angeordneten Profile
c. Erfassung eines entgegen der gewünschten Orientierung angeordneten Profils
d. Bewegung der Wendestation in die Bewegungsbahn der Profile
e. falsch orientiertes Profil bewegt sich in den Drehbereich der Wendestation
f. Drehung des Profils in der Wendestation um 90°
g. Bewegung der Wendestation unter die Bewegungsbahn der Profile
h. Zurückschwenken der Wendestation in die Ausgangsstellung.
